Europäisches Patentamt

European Patent Office

Office européen des brevets

(19)

(11) Publication number: **0 294 738**
**A2**

(12) # EUROPEAN PATENT APPLICATION

(21) Application number: **88108990.8**

(22) Date of filing: **06.06.88**

(51) Int. Cl.⁴: **H04N 7/00 , H04N 7/12**

(30) Priority: **10.06.87 FI 872588**

(43) Date of publication of application:
**14.12.88 Bulletin 88/50**

(84) Designated Contracting States:
**AT BE CH DE ES FR GB GR IT LI LU NL SE**

(71) Applicant: **OY NOKIA AB**
**Mikonkatu 15 A**
**SF-00100 Helsinki(FI)**

(72) Inventor: **Rikkinen, Kari**
**Mannerheimintie 40 A 43**
**SF-00100 Helsinki(FI)**
Inventor: **Henriksson, Jukka**
**Leilankuja 4 B 18**
**SF-02230 Espoo(FI)**

(74) Representative: **Körber, Wolfhart, Dr. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**D-8000 München 22(DE)**

(54) A method, a transmitter and a receiver for the transmission of digital auxiliary information.

(57) The invention relates to a method, a transmitter and a receiver for the transmission of digital auxiliary information above a frequency band used by a main signal. According to the invention a spectrum portion which can be added directly above the spectrum of the main signal is selected by band pass filtering amongst spectrum portions falling between the zero points of the generated partial response signal. Preferably both the main signal and the auxiliary information are transmitted by means of one and the same clock (or two interlocked clocks). The frequency conversion required in the detection of the auxiliary communication can also be carried out by means of a cosine signal generated from the timing signal of the main signal.

FIG. 1

# A method, a transmitter and a receiver for the transmission of digital auxiliary information

The invention relates to a method, a transmitter and a receiver for the transmission of digital auxiliary information above a frequency band used by a main signal.

One application of the invention is HDTV (high definition TV), i.e. the improvement of the quality of TV image. The auxiliary communication capacity required by the HDTV must be added above a signal according to the D2-MAC standard so that it interferes with the normal D2-MAC transmission as little as possible. In principle, the D2-MAC signal utilizes the band 0...5 MHz and the auxiliary information can be positioned e.g. within the frequency band 5...10 MHz. Since the required auxiliary capacity is about 10 Mbit/s, there is some difficulty in effecting conventional solutions (e.g. QAM): a major part of the spectrum would fall within the frequency range below 5 MHz, or the required tight filtering would cause mutual interference of auxiliary information.

The object of the present invention is to provide a method of transmitting digital auxiliary information above a frequency band used by a main signal substantially without interfering with the main signal. A further object of the invention is to provide for tight filtering for separating the main signal and the auxiliary information while the resultant mutual interference of the auxiliary information is low, controlled and predictable.

This object is achieved according to the invention by means of a method disclosed in claim 1. The basic idea of the invention is that a spectrum portion which can be added directly above the spectrum of the main signal is selected by band pass filtering amongst spectrum portions falling between the zero points of the generated partial response signal.

Preferably both the main signal and the auxiliary information are transmitted by means of one and the same clock (or two interlocked clocks). This enables the transmission of the auxiliary signal even at low levels, because the timing signal is obtained from the intensive main signal. The frequency conversion required in the detection of the auxiliary communication can also be carried out by means of a cosine signal generated from the timing signal of the main signal.

The method according to the invention provides an efficient separation of the main signal from the auxiliary information. A reasonable attenuation of the auxiliary information signal can be obtained with practical low pass filters when the main signal is detected in the receiver.

The invention is also concerned with a transmitter which is characterized by what is disclosed in claim 4.

Also, the invention is concerned with a receiver which is characterized by what is disclosed in claim 8.

The invention will be described in more detail in the following with reference to the attached drawing, wherein

Figure 1 is a schematical view of one embodiment of a transmitter and a receiver according to the invention,

Figure 2 is a schematical view of another embodiment of the receiver according to the invention,

Figures 3A to 3E illustrates some of the signals of Figures 1 and 2 in the time domain,

Figures 4A to 4E illustrate signals from the transmitter of Figure 1 in the frequency domain, and

Figures 5A to 5D illustrate signals from the receivers of Figures 1 and 2 in the frequency domain.

The invention will be illustrated in the following by means of a specific HDTV application in which the main signal is a D2-MAC signal. The intention is not, of course, to restrict the invention to this particular application.

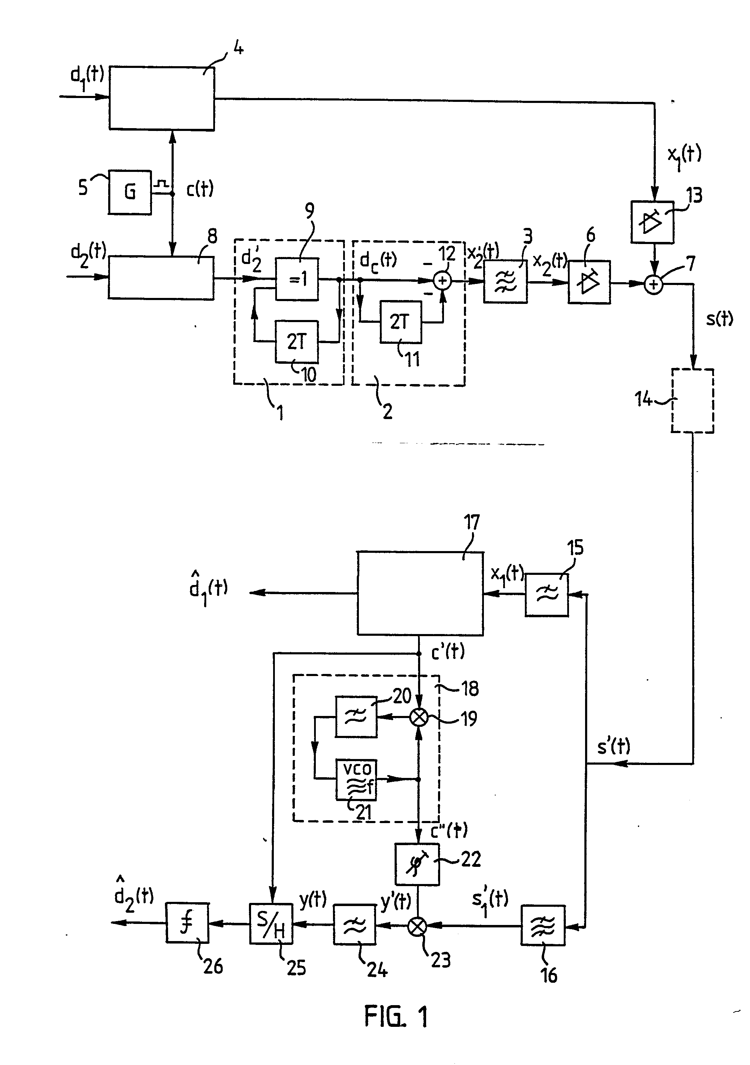

In the transmitter shown in Figure 1, a D2-MAC signal $d_1(t)$ is applied to a duobinary coder 4 a timing signal $c(t)$ of which is generated by a timing signal generator 5. A duobinary output $x_1(t)$ of the coder 4 is applied through a level adjusting means 13 to one input in a summing means 7.

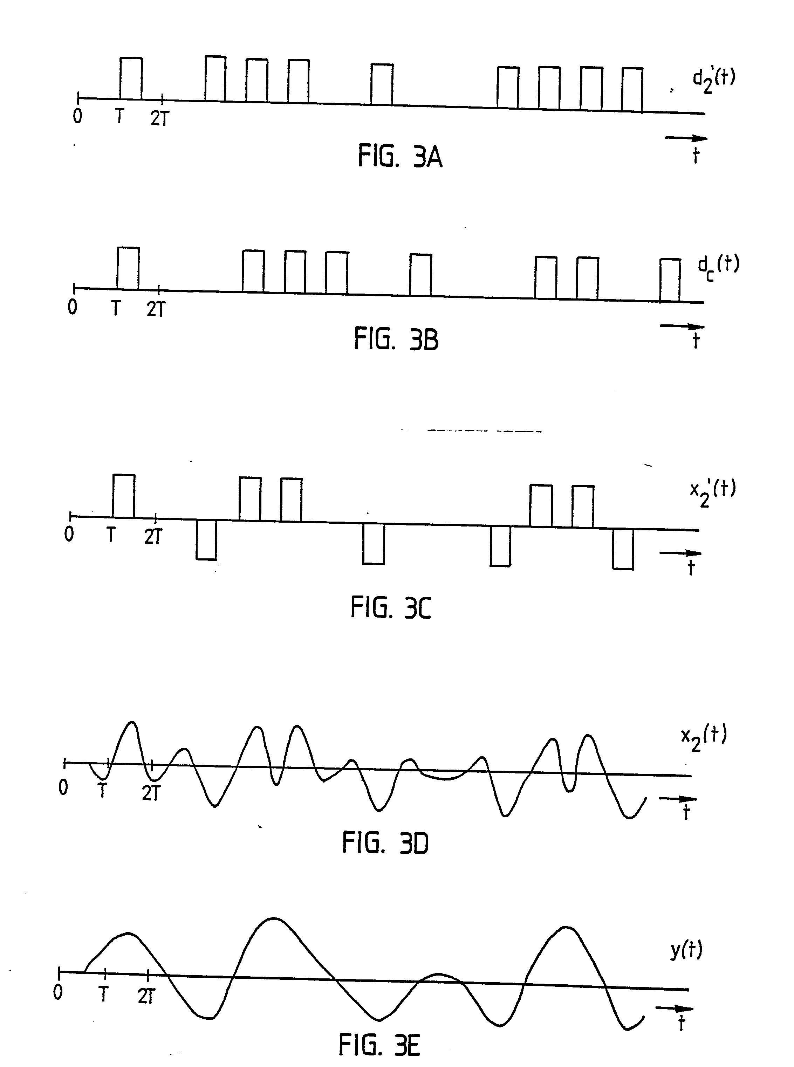

A digital auxiliary signal $d_2(t)$, e.g. a RZ sequence, is applied through a buffer 8 into an input in a precoder 1 in synchronization with the timing signal $c(t)$. The signal $d_2'(t)$ at the input of the precoder 1 is illustrated in Figure 3A. The function of the precoder 1 is to facilitate the detection of the auxiliary signal at the receiver and thus to reduce detection errors. Naturally, it can be omitted or replaced with a device of some other type. The precoder 1 comprises an exclusive OR gate having a first input connected to the output of the buffer 8 and a second input whereto the output of the gate itself is feedbacked through a delay 10 of two clock cycles. An output signal $d_c(t)$ of the precoder 1, shown in Figure 3B, is applied to the input of a partial response coder 2.

The partial response coder 2 comprises a summing means 12 and a delay 11 of two clock cycles. The precoded signal $d_c(t)$ is applied directly to the first input of the summing means 12 and through the delay 11 in an inverted form to the second input of the summing means 12, whereby the output signal $x_2'(t)$ is a three-level signal of the type shown in Figure 3C. In other words, the partial response coder 2 is a filter with a periodical transfer function in which the zero points are positioned at uniform intervals in the frequency domain.

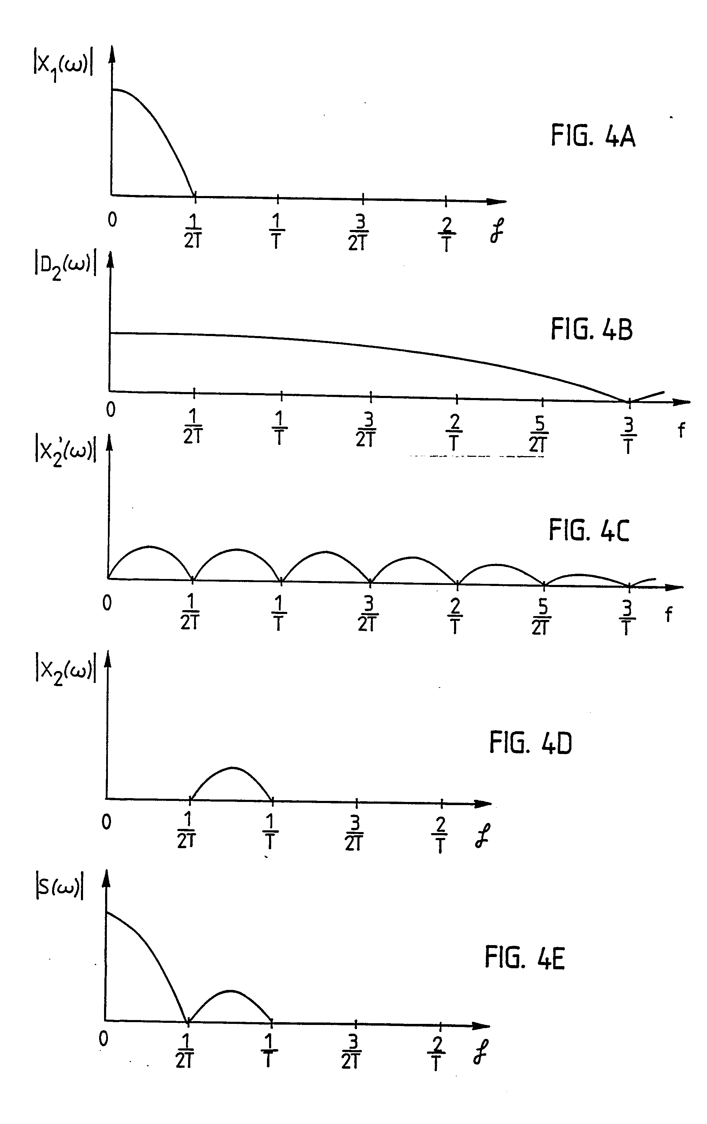

Figures 4A to 4C illustrate the frequency spectra of the signals $x_1(t)$, $d_2'(t)$ and $x_2'(t)$. It is to be seen that the spectrum of the main signal is within the frequency range from 0 to 1/2T when the frequency of the timing signal is 1/T and duobinary signalling is used. The pulses of the auxiliary signal $d_2'(t)$ are narrow (Figure 3A), whereby the spectrum is broad, as appears from Figure 4B. In an ideal case, the pulses of the $d_2'(t)$ are infinitely narrow delta functions, whereby the spectrum $/D_2-(W)/$ is of constant height. After the partial response coding (i.e. filtering) the spectrum $/x_2'(w)/$ shown in Figure 4C is obtained in which zero points are positioned at uniform intervals of 1/2T when the auxiliary signal and the main signal utilize the same timing signal c(t). The finite pulse width causes a minor distortion so that all the spectrum cycles are not identical with each other. In the detection this causes to some extent mutual interference between the pulses of the auxiliary signal, but this can be easily compensated for, if desired, by means of a linear filter which removes the described gain distortion.

According to the invention the partial response signal $x_2'(t)$ is then filtered by means of a band-pass filter 3 which passes a spectral cycle within the frequency range from 1/2T to 1/T, whereby the spectrum of the output signals $x_2(t)$ from the band-pass filter 3 is as shown in Figure 4C. The output signal $x_2(t)$ from the band-pass filter 3 is then applied through a level adjusting means 6 to one input of the summing means 7, whereafter it is summed with the duobinary signal $x_1(t)$ at the other input, which results in a signal s(t) to be transmitted. The ratio between the levels of the auxiliary signal $x_2(t)$ and the main signal $x_1(t)$ is adjusted by means of attenuators so that the influence of the auxiliary signal on the main signal is small and that its own error ratio, however, is sufficiently low. With a D2-MAC signal, a suitable difference in levels is e.g. about 10 dB.

The spectrum of the signal s(t) to be transmitted is illustrated in Figure 4E. The spectrum of the duobinary signal $x_1(t)$ falls within the frequency range from 0 to 1/2T, and the bandpass-filtered partial response of the auxiliary signal falls within the frequency range from 1/2T to 1/T. As to the spectrum of the signal s(t), it should be noted that both the main signal $x_1(t)$ and the auxiliary signal $x_2(t)$ have a spectral zero at a frequency of 1/2T (i.e. at a frequency of 5 MHz in a normal application). This enables an efficient separation of the signals at the receiving end by means of practical filters of the low and high pass type. In addition, the auxiliary signal has a spectral zero at a frequency of 1/T (10 MHz in a normal application), which is of advantage when transmitting the signal s(t) over a bandwidth-limited low pass channel.

The signal s(t) to be transmitted is transfered over a transmission channel 14 which represents generally the devices and the measures needed in the transmission. These may include an FM modulation of the signal s(t) to the desired channel for a radiofrequency transmission and a corresponding FM detection at the receiving end.

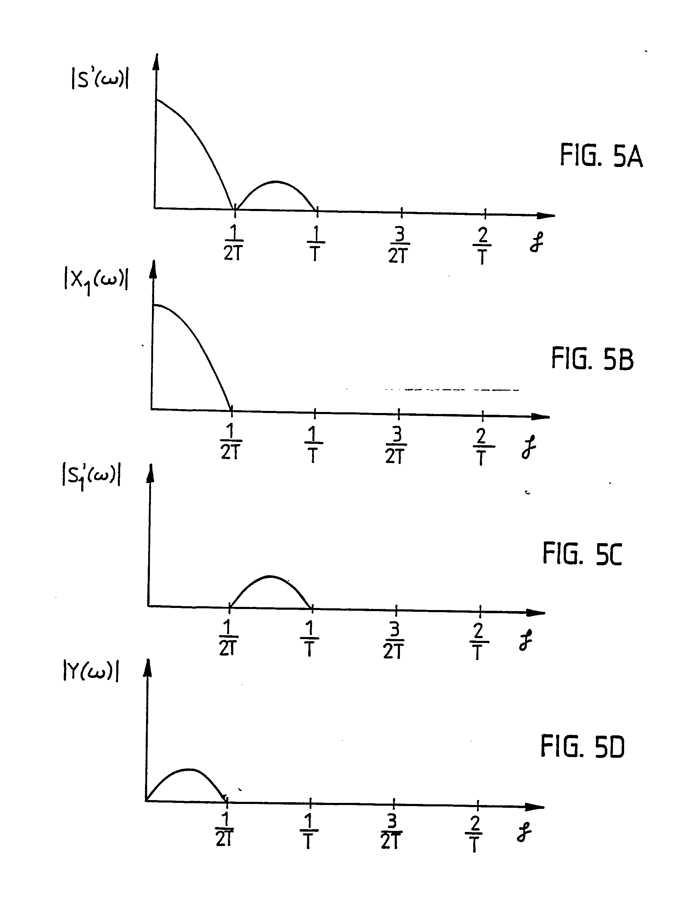

The signal $s'(t)$ received in the receiver is applied both to a low-pass filter 15 and to a band-pass filter 16. The low-pass filter 15, having a cut-off frequency of 1/2T (5 MHz), removes from the received signal $s'(t)$ the portion of the auxiliary signal, and the output signal $x_1(t)$ is a pure main signal which is applied to a duobinary detector 17 in which the main signal is detected and the timing signal $c'(t)$ is removed therefrom in a conventional manner. This is demonstrated in the frequency domain in Figures 5A and 5B.

Correspondingly, the band-pass filter 15, having likewise a lower cut-off frequency of about 1/2T, filters from the received signal $s'(t)$ an auxiliary signal $s_1'(t)$, which is illustrated in Figures 5A and 5C. Depending on the character of the bandwidth-limited transmission channel, the band-pass filter 16 can in some cases be replaced with a high-pass filter having a cut-off frequency of 1/2T. The filtered bandpass type signal $s_1'(t)$ at the output of the filter 16 is applied to one input in a multiplying means 23. A cosine signal having a frequency of 1/T is applied to the other input of the multiplying means 23, whereby the multiplying means 23 multiplies the inputs by each other, thus converting the bandpass type signal $s_1(t)$ to the baseband frequency. The multiplying means 23 may be e.g. a balanced modulator circuit.

In the receiver of Figure 1, the cosine signal applied to the multiplying means 23 is generated by means of a phase-locked loop 18 comprising an oscillator 21 which is locked in the timing signal $c'(t)$ separated from the main signal $x_1(t)$. An adjustable phase shifter 22 for compensating the possible phase differences caused by the filterings is provided be tween the phase-locked loop 18 and the multiplying means 23.

The baseband-frequency output signal from the multiplying means 23 is filtered with a low-pass filter 24 having a cut-off frequency of about 1/2T so as to remove from the signal the 2nd harmonic components created in the multiplication. Figure 5D illustrates the spectrum of a signal y(t). The output signal y(t) of the low-pass filter 24 is applied to a sample and hold circuit 25. The sampling clock of the sample and hold circuit 25 is a timing signal $c'(t)$ derived from the main signal, and the circuit takes samples from the signal y(t) at the frequency of 1/T. The sampling is illustrated by broken lines in Figure 3E.

A decision means 26 is connected to the output of the sample and hold circuit 25 for converting the output signal of the sample and hold circuit into a three-level signal $\hat{d}_2(t)$ in which the extreme levels correspond to the transmitted binary symbol "1" and the zero level to. the symbol "0". It is noted that the digital signal $\hat{d}_2(t)$ derived from the signal of Figure 3E corresponds to the signal of Figure 3C. The proper auxiliary information $d_2(t)$ is obtained from the signal $\hat{d}_2(t)$ by converting the three-level signal into a binary signal in accordance with the rule given above.

The conversion to the baseband frequency required in the detection can also be effected by synchronized sampling and low-pass filtering. This could be carried out digitally. The synchronization can be effected e.g. by means of the above-mentioned phase-locked loop.

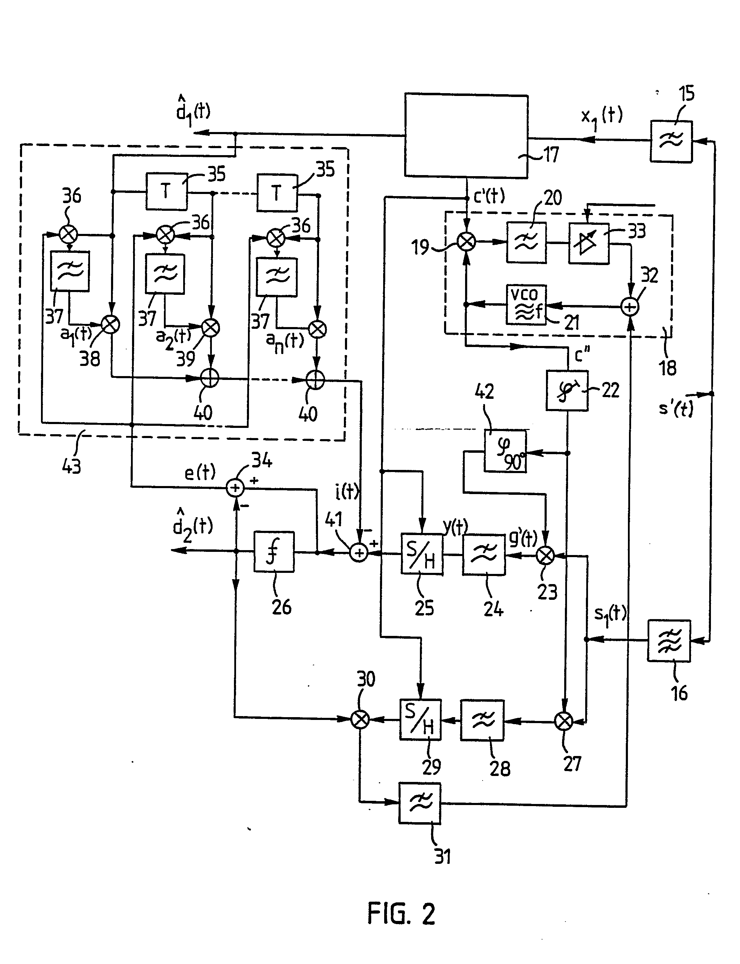

Figure 2 shows another receiver according to the invention, which to a great extent corresponds to the receiver according to Figure 1. Corresponding parts in Figures 1 and 2 are indicated with the same reference numerals. The main signal $x_1(t)$ is detected after the low-pass filter 15 in a conventional way in a detection block 17.

This alternative realization of the receiver utilizes the fact that the detection to be carried out by the multiplying means 23 is at its optimum when the quadrature component of the detected signal is zero. This information can be used in the adaptive adjustment of the detection. For the realization of this adjustment, the quadrature component of the signal $s_1{}'(t)$ is detected, too.

For the detection of the quadrature component, the receiver is provided with a second multiplying means 27 one input of which is connected to the output of the band-pass filter 16. The output of the phase-locked loop 18 is applied through a phase-shifting means 42 of 90 degrees to the multiplying means 23 and without the phase-shift of 90 degrees to the other input of the multiplying means 27, whereby the multiplying means 27 multiplies it by the signal $s_2{}'(t)$. The multiplying result is lowpass filtered by means of a low-pass filter 28 which is similar to the low-pass filter 24 and is connected to the output of the multiplying means 27. The sample and hold circuit 29 controlled by the timing signal $c'(t)$ separated from the main signal takes samples from the output of the low-pass filter. The detected quadrature component generated at the output of the sample and hold circuit 29 is applied to one input in a third multiplying means 30 while the output signal $d_2(t)$ of the decision means 26 is connected to the other input of the third multiplying means 30. The signals at the inputs of the multiplying means 30 are correlated by multiplying them by each other and by low-pass filtering of the result by a narrow-bandwidth low-pass filter 31 at the output of the multiplying means 30. The bandwidth of the filter 31 is chosen to have a much lower value than 1/T in order that the output voltage of the filter would represent the averaging. The averaged output voltage is applied to a summing means 32 an output of which controls a voltage-controlled oscillator 21 of the phase-locked loop 18. When the detection is at optimum, the output of the sample and hold circuit 29 is zero, as a result of which the output of the multiplying means, too, is zero. When the detection deviates from the optimum, the value of the output of the multiplying means starts to deviate from zero.

The phase-locked loop comprises after a loop filter 20 a voltage-controlled amplifier 33 the output of which is connected to the summing means 32. Initially, and after the locking of the coherent detection of the auxiliary communication has been lost (information is obtained e.g. by monitoring the error ratio of the detected signal by means of coding), the gain of the amplifier 33 is high (e.g. 0 dB) and the phase-locking takes place in the signal $c'(t)$. The filter 20 may have a relatively wide bandwidth, whereby the right frequency is obtained rapidly and also the phase approaches the optimum value. After the locking has been achieved, the gain of the amplifier 33 is reduced considerably (e.g. 20 dB), whereby the control of the VCO 21 can be effected in the locked state mainly by means of the output of the filter 31, a correlation voltage. This way of control is to be preferred as it results in the minimizing of the average square error $\overline{e^2}$ at the decision point 26.

A further advantageous feature of the receiver of Figure 2 is the removal of the crosstalk of the main signal from the detection of the auxiliary signal. Such crosstalk may occur if the filter 16 also passes spectrum portions belonging to the main signal to some extent. This is effected by using an adaptive .transverse filter 43 whereto the detected main signal $\hat{d}_1(t)$ is applied and an output i(t) of which is applied to an inverting input of the summing means 41. A non-inverting input of a summing means 41 is connected to the output of the sample and hold circuit 25, whereby the summing means 41 subtracts the signal i(t) from an auxiliary signal sample, and the difference is applied to the decision means 26.

The transverse filter 43 may comprise one or more branches, each comprising a multiplier 38, 39, etc. The main signal is applied directly to the input of the first multiplier 38, to the input of the second multiplier 39 through a delay 35 of one clock cycle, to the third through a delay of two clock cycles, etc. The output signals of the branches are summed by a summing means 40. Control inputs in the multipliers can be, for instance, arranged to effect a gradient method for minimizing the average square error.

For this purpose, there is provided a summer 34 having an inverting output which is connected to the output of the decision means 26 and a non-inverting input which is connected to the input of the decision means 26, whereby the summer 34 subtracts the output of the decision means 26 from the input thereof, thus forming an error signal e(t). The error signal e(t) can be correlated in each branch with a main signal at the input of the multiplier 38 and 39, respectively. In practice, the correlation can be realized e.g. as shown in Figure 2. Each branch of the transverse filter 43 is provided with a multiplier 36 and a low-pass filter 37. One input of each multiplier 36 is connected to the multiplier 38 or 39, respectively, of the respective branch, and the error signal e(t) is applied to the other input of the multiplier 36. The narrow bandwidth low-pass filter 37 connected to the output of the multiplier 36 averages the output signal, thus forming a control $a_1$ and $a_2$ of each branch, respectively.

In the above examples the frequency of the timing signal of the main signal equals to the timing signal of the auxiliary signal. The frequency of the timing signal of the auxiliary signal may, however, also be lower than that of the timing signal of the main signal, preferably a whole number part. The spectrum of the auxiliary signal is thereby narrower, and it is easy to select a partial response spectrum of the auxiliary signal such that an interspace remains between the auxiliary signal spectrum and the main signal spectrum. This, of course, makes it easier to separate the signals by filtering and reduces the mutual interference.

The figures and the description related thereto are only intended to illustrate the invention. In its details, the invention may vary within the attached claims.

## Claims

1. A method of transmitting digital auxiliary information above a frequency band used by a main signal, **characterized** in that a partial response signal is derived from the digital auxiliary information signal by filtering the auxiliary information signal with a filter having a periodic transfer function in which zero points are positioned at uniform intervals in the frequency domain, and that a spectrum portion falling between two successive zero points and having a frequency above the zero frequency is extracted from the spectrum of the obtained partial response signal by band-pass filtering, whereafter the main signal and the band-pass filtered signal are combined so as to form a signal to be actually transmitted.

2. A method according to claim 1, **characterized** in that the auxiliary information signal is synchronized with the timing signal of the main signal or with a timing signal proportioned thereto in a predetermined way.

3. A method according to claim 1 or 2, **characterized** in that at the receiver end the main signal and the auxiliary information signal are separated from each other by filtering and detected, whereby a timing signal separated from the main signal or a signal derived therefrom is used in the conversion of the auxiliary information signal to a baseband frequency and in the detection thereof.

4. A transmitter for transmitting digital auxiliary information above a frequency band used by a main signal $(x_1(t))$, comprising a coding means (4) for coding the main signal and a generator means (5) generating for said coding means (4) a timing signal $(c(t))$ having a frequency of 1/T wherein T is the cycle length of the timing signal, **characterized** in that the transmitter comprises

means (8) for synchronizing an incoming digital auxiliary information signal $(d_1(t))$ with a further timing signal having a frequency of 1/nT wherein n = 1, 2...,

a partial response coder (2) for converting the synchronized baseband-frequency auxiliary information signal into a partial response signal $(x_2'(t))$ having a periodic spectrum in which the zero points are positioned at intervals of 1/2T,

a band-pass filter (3) connected to the output of the partial response coder (2) for extracting a desired spectrum portion falling between two successive spectral zeros of the partial response signal and having a frequency above the zero frequency,

a combining means (7) having a first input connected to the output of said band-pass filter (3) and a second input connected to the output of said coding means for the main signal for combining the main signal and the band-pass filtered auxiliary information signal into a signal $(s(t))$ to be actually transmitted.

5. A transmitter according to claim 4, **characterized** in that said means for synchronizing the auxiliary information signal comprises a buffer means (8) having a clock input connected to the source of said further timing signal, and that the transmitter further comprises a precoder (1) controlled by said further timing signal and comprising an exclusive-OR-gate means (9) having a first input to which the output of the buffer means (8) is connected and a second input to which the output of said gate means itself is connected back through a delay (10) having the length of two clock pulses, said output being also connected to an input in the partial response coder (2).

6. A transmitter according to claim 4 or 5, **characterized** in that the partial response coder (2) comprises a summing means (12), the input of said partial response coder (2) being connected directly to a first input in the summing means (12) and after inversion in a delay (11) of two clock pulses to a second input in said summing means (12).

7. A transmitter according to claim 4, 5 or 6, **characterized** in that n is 1 and the timing signal $(c(t))$ of the coding means (4) is also said further timing signal.

8. A receiver for receiving a signal $(s'(t))$ comprising a main signal and a digital auxiliary information signal positioned above a frequency band used by the main signal, comprising

a detecting means (17) for detecting the main signal $(x_1(t))$ and for separating a timing signal $(c'(t))$,

a low-pass filter (15) for separating the main signal $(x_1(t))$ from the received signal $(s'(t))$ and for applying it to said detecting means (17),

a high-pass or band-pass filter (16) for extracting an auxiliary information signal $(s'_1(t))$ from the received signal,

means (18, 22, 23) for converting the filtered auxiliary information signal $(s_1'(t))$ to the baseband frequency, and

a second low-pass filter (24) for filtering a base-frequency auxiliary information signal $(y'(t))$, **characterzed** in that the receiver further comprises

a further detecting means (25, 26) a timing signal of which is derived from the timing signal $(c'(t))$ of the main signal for detecting the auxiliary information signal $(y(t))$.

9. A receiver according to claim 8, **charactrized** in that said means for converting the filtered auxiliary information signal $(s_1'(t))$ to the baseband frequency comprises a multiplying means (23) having a first input connected to the output of the high-pass or band-pass filter (16) and a second input whereto a cosine signal generated by a phase-locked loop (18) locked in the timing signal of the main signal is applied.

10. A receiver according to claim 8 or 9, **characterized** in that said further detecting means comprises a sample and hold means (25) controlled by the timing signal $(c'(t))$ of the main signal and having an input connected to the output of the second low-pass filter (24), and a decision means having an input connected to the output of the sample and hold means (25) for converting sample values into a three-level signal $(\hat{d}_2(t))$.

11. A receiver according to any of the preceding claims, **characterized** in that said means for converting the filtered auxiliary information signal to the baseband frequency further comprises a second multiplying means (27) having a first input connected to the output of the high-pass or band-pass filter (16) and a second input whereto a sine signal from the phase-locked loop (18) is applied, said sine signal being 90° out of phase with the cosine signal applied to said first multiplying means (23); a third low-pass filter (28) having an input connected to the output of the second multiplying means (27); a second sample and hold means (29) for taking samples from the output of the third low-pass filter (28); a third multiplying means (39) having a first input connected to the output of the second sample and hold means (29) and a second input connected to the output of the decision means (26) and an output connected through a forth low-pass filter (31) to control a voltage-controlled oscillator (21) of the phase-locked loop (18), the phase-locked loop (18) comprising control means (33, 32) allowing the voltage-controlled oscillator (21) of the phase-locked loop (18) to be controlled by the output of the forth low-pass filter (31) on the basis of a control signal obtained from somewhere else in the receiver.

12. A receiver according to claim 11, **characterized** in that said control means comprise an amplifier (33) the gain of which is controllable by means of said control signal and an input of which is connected to the output of a loop filter (20) of the phase-locked loop (18), and a summing means (32) having a first output whereto the output of the amplifier (33) is connected and a second input whereto the output of the forth low-pass filter (31) is connected, the output being connected to the voltage-controlled oscillator (21).

FIG. 1

**FIG. 2**

FIG. 3A

$d_2'(t)$

$0 \quad T \quad 2T \qquad\qquad\qquad\qquad\qquad\qquad\qquad\qquad\qquad\qquad\qquad t$

FIG. 3B

$d_c(t)$

$0 \quad T \quad 2T \qquad\qquad\qquad\qquad\qquad\qquad\qquad\qquad\qquad\qquad\qquad t$

FIG. 3C

$x_2'(t)$

$0 \quad T \quad 2T \qquad\qquad\qquad\qquad\qquad\qquad\qquad\qquad\qquad\qquad\qquad t$

FIG. 3D

$x_2(t)$

$0 \quad T \quad 2T \qquad\qquad\qquad\qquad\qquad\qquad\qquad\qquad\qquad\qquad\qquad t$

FIG. 3E

$y(t)$

$0 \quad T \quad 2T \qquad\qquad\qquad\qquad\qquad\qquad\qquad\qquad\qquad\qquad\qquad t$

FIG. 4A

FIG. 4B

FIG. 4C

FIG. 4D

FIG. 4E

$|S'(\omega)|$

FIG. 5A

$\frac{1}{2T}$    $\frac{1}{T}$    $\frac{3}{2T}$    $\frac{2}{T}$    $f$

$|X_1(\omega)|$

FIG. 5B

$\frac{1}{2T}$    $\frac{1}{T}$    $\frac{3}{2T}$    $\frac{2}{T}$    $f$

$|S_1'(\omega)|$

FIG. 5C

$\frac{1}{2T}$    $\frac{1}{T}$    $\frac{3}{2T}$    $\frac{2}{T}$    $f$

$|Y(\omega)|$

FIG. 5D

$\frac{1}{2T}$    $\frac{1}{T}$    $\frac{3}{2T}$    $\frac{2}{T}$    $f$